# EUROPÄISCHE PATENTSCHRIFT

(11) **EP 2 801 816 B1**
(45) Veröffentlichungstag und Bekanntmachung des Hinweises auf die Patenterteilung: **11.04.2018**
(21) Anmeldenummer: 14167353.3
(22) Anmeldetag: 07.05.2014
(51) Int. Cl.: G01N 21/956, G01N 21/88, G06T 7/00

(54) **Verfahren und Vorrichtung zur optischen Analyse eines PCBs**
Method and device for the optical analysis of a PCB
Procédé et dispositif d'analyse optique d'un PCB

(30) Priorität: 07.05.2013 DE 102013104679
(43) Veröffentlichungstag der Anmeldung: 12.11.2014
(73) Patentinhaber: WiTrins s.r.o., 25064 Hovorcovice (CZ)
(72) Erfinder: Wieser, Roman, 94405 Landau an der Isar (DE)
(74) Vertreter: Spachmann, Holger

(56) Entgegenhaltungen:
- EP-A2- 0 231 941
- DE-A1-102010 028 894
- DE-A1-102010 060 375

## Beschreibung

Die Erfindung betrifft ein Verfahren und eine Vorrichtung zur optischen Analyse eines PCBs (Printed Circuit Board - Leiterplatte), die eine Bilderfassungseinrichtung, eine Lichtquelleneinrichtung und eine Bildverarbeitungseinrichtung umfasst.

### HINTERGRUND DER ERFINDUNG

Aus dem Stand der Technik sind verschiedene optische Messverfahren und Vorrichtungen bekannt, mit dem die Herstellqualität eines PCBs bestimmt werden kann.

So ist unter anderem bekannt, ein Höhenprofil von auf einer Leiterplatte angeordneten Bauteilen mit Hilfe einer optischen Triangulation, beispielsweise Lasertriangulation oder einem spektroskopischen Verfahren zu ermitteln. Hierbei wird ein Weißlichtstrahl in einem Winkel auf ein PCB abgegeben, der mittels eines Prismas in Spektralfarben aufgefächert wird. Aufgrund eines reflektierten Farbwerts kann auf eine Höhe der Oberflächenstruktur des PCBs geschlossen werden. Derartige Inspektionsverfahren dienen insbesondere dazu, Fehler bei einer Bauteilbestückung und die Qualität von Lötstellen zu. Des Weiteren sind Durchleuchtungsverfahren bekannt, bei denen semitransparente PCBs optisch analysiert werden, um insbesondere bei einem mehrlagigen Aufbau des PCBs die Ausrichtung und Qualität jedes PCB-Layer während des Herstellprozesses zu überprüfen.

Des Weiteren ist es bekannt, ein Weißlichtbild einer Oberfläche eines PCBs aufzunehmen und dieses mit einem Referenzbild, beispielsweise mit einer Musterplatine (Golden Sample) zu vergleichen.

Die aus dem Stand der Technik bekannten Verfahren können einzeln dazu eingesetzt werden, verschiedene Fehlerquellen, beispielsweise die Erkennung von Kurzschlüssen, das gegeneinander Verschieben von Layern einer mehrschichtigen Platine, die Qualität von Lötverbindungen oder die richtigen Positionierungen von Bauteilen zu erkennen. Allerdings scheitern die bekannten Verfahren zum einen an einer schnellen Analyse einer hohen Anzahl von Leiterplatten, zum anderen an einer Analyse verschiedener Fehlerquellen, wie die korrekte Anordnung von leitenden Oberflächen, die Erkennung von Kurzschlüssen und die richtige Positionierung von Bauteilen mittels eines einzigen Analysevorgangs. Mit Hilfe eines Höhenmessverfahrens, beispielsweise einer Lasertriangulation oder eines spektroskopischen Verfahrens lassen sich lediglich Höhenunterschiede auf einer Platinenoberfläche erkennen, jedoch keine Kurzschlüsse bzw. fehlerhafte Leiterbahnführungen. Mit Hilfe eines rein optischen Verfahrens lassen sich insbesondere bei semitransparenten Platinen nur schwer korrekte Materialverteilungen erkennen. Insbesondere bei variierenden Lichtverhältnissen und einer ungenauen Justierung der Lichtquelle bzw. der Kamera kann ein Vergleich gegenüber vorgegebenen Daten nur schwierig durchgeführt werden.

Aus der DE 10 2011 018 823 A1 ist eine Inspektionsvorrichtung und ein Inspektionsverfahren zur Fehleranalyse von gedruckten PCBs bekannt, wobei vor und nach Bedrucken eines Layers eines PCBs ein optisches Abbild erfasst wird, ein Differenzbild ausgewertet wird, und dass Differenzbild auf Druckfehler analysiert wird. Es wird als Beleuchtungseinheit eine Weißlichtquelle verwendet.

Die EP 2 307 582 B1 betrifft eine optische Höhenvermessungseinrichtung eines PCB-Produktes, wobei verschiedene Bauteilhöhen durch einen Abschnitt eines unter einem Winkel einfallenden reflektierten multichromatischen Lichtstrahls detektiert und mit einer Referenzhöhe verglichen wird. Hierdurch können Bauteil-Fehlplatzierungen und fehlerhafter Lotstellen erkannt werden.

Eine gattungsgemäße Höhenvermessungseinrichtung ist des Weiteren aus der DE 10 2010 028 894 A1 bekannt.

In der DE 10 2010 060 375 A1 ist ein Referenzbild-Vergleichsverfahren zur Inspektion von Wafern bekannt, bei dem Farb- oder Grauwerte jedes Bildpunktes eines Bildes einer Waferoberfläche mit einem Referenzbild verglichen werden.

In der EP 0 231 941 A2 ist eine Vorrichtung zur automatischen Inspektion eines PCBs beschrieben, um eine korrekte Anordnung und Orientierung von Bauteilkomponenten auf einer Platine zu überprüfen. Hierzu werden Bildinformationen verschiedenfarbiger Bilder der bestückten Platine herangezogen, die unter Verwendung arithmetischer Verfahren miteinander verrechnet und mit Referenzdaten verglichen werden.

Ausgehend von dem oben genannten Stand der Technik ist es Aufgabe der Erfindung, ein verbessertes optisches Analyseverfahren zur Bestimmung einer Herstellqualität eines PCBs vorzuschlagen, das einfach anwendbar ist, eine schnelle Analyse mit hoher Genauigkeit gewährleisten kann und konstruktiv leicht umzusetzen ist.

### OFFENBARUNG DER ERFINDUNG

Gelöst wird die oben genannte Aufgabe durch ein Verfahren und eine Vorrichtung nach den unabhängigen Ansprüchen. Vorteilhafte Ausführungsformen der Erfindung sind Gegenstand der abhängigen Ansprüche.

Erfindungsgemäß wird ein Verfahren zur optischen Analyse eines PCBs vorgeschlagen, wobei eine Bilderfassungseinrichtung Farbteilbildinformationen eines von einer Lichtquelleneinrichtung auf einer Oberfläche des PCBs reflektierten Lichts und/oder durch das PCB hindurchstrahlenden Licht getrennt nach Grundfarben erfasst, und eine Bildverarbeitungsvorrichtung zumindest eine Farbteilbildinformation, insbesondere zwei oder mehrere Teilbildinformationen, in Analysebildinformationen umwandelt, wonach die Analysebildinformationen mit Referenzbildinformationen verglichen und PCB-Fehler erkannt werden können, so dass eine PCB-Herstellqualität bestimmbar ist.

Es wird erfindungsgemäß vorgeschlagen, dass die Bildverarbeitungseinrichtung die Farbteilbildinformationen, insbesondere die RGB-Farbbildinformationen in einen HSV-Farbraum als Analysebildinformationen umrechnet, und zum Vergleich mit Referenzbildinformationen, insbesondere mit CAD-Daten und Materialverteilungsdaten analysiert, wobei bevorzugt Intensitätswerte unbeachtet bleiben. Typische CAD-Daten von PCBs sind sogenannte Gerberdaten, wie die von NC-Maschinen (Numerical Control-Maschinen) zur Herstellung von PCB-Rohlingen verwendet werden. Die Materialverteilungsdaten beschreiben die Verteilung der einzelnen Leitermaterialien auf den PCB, beispielsweise in verschiedenen Layerebenen. Durch Kenntnis der CAD- und Materialverteilungsdaten können Reflektionseigenschaften und entsprechende Farbbildinformationen ausgewählt werden, um die entsprechenden Strukturen, die diese Materialien beinhalten, besser darstellen zu können. Die vorliegenden Farbbildinformationen, insbesondere die RGB-Farbbildinformationen können beispielsweise im HSV-Raum, d.h. in einen Farbraum, in denen getrennte Informationen des Farbwertes (hue), der Farbsättigung (saturation) und Hellwert (value) vorliegen.

Alternativ können ein HSL-Farbraum oder ein HSB-Farbraum verwendet werden. Der HSV-Farbraum teilt die Farbbildinformationen in Informationen auf, die den Informationen des menschlichen Auges ähneln. Auch im menschlichen Auge sind Rezeptoren für die Helligkeit, für den Farbwert und für die Farbsättigung getrennt voneinander vorhanden. Der Farbwinkel (hue) spezifiziert die dominante Wellenlänge der Farbe und lässt sich eindeutig den verwendeten Grundfarben R, G, B zuordnen. Der Sättigungswert (saturation) entspricht einer Zumischung von Weißlicht und definiert den Anteil des reinen Farbwertes oder dessen Bandbreite um die dominante Wellenlänge herum. Der Helligkeitswert (value) entspricht dem Energiegehalt der Farbteilbildinformation und kann als Maß für die Reflektivität der entsprechenden Pixel dienen. Es stellt sich als günstig heraus, bei der Erstellung der Analysebildinformation den Helligkeitswert (value) unberücksichtigt zu lassen. Die im HSV-Raum vorliegenden Informationen können insbesondere zur Analyse der Materialverteilung verwendet werden, da verschiedene Materialien verschiedene H, S und V-Werte aufweisen. Zur Verbesserung des Kontrasts und zur Erhöhung der Auflösung können diese Informationen wiederum mit Farbteilbildinformationen verrechnet werden, beispielsweise multipliziert und skaliert werden, um verbesserte Analysedaten zu erhalten.

Weiterhin wird erfindungsgemäß die Analysebildinformationen des HSV-Farbraums mit Farbteilbildinformationen kombiniert, wobei ein Vergleich mit Referenzbildinformationen, insbesondere mit CAD-Daten und Materialverteilungsdaten auf Basis der kombinierten Daten durchgeführt wird. Durch die Kombination kann eine höhere Kontrastverbesserung erreicht werden, wobei insbesondere unter Berücksichtigung eines Transmissionsfarbwertes von Weißlicht eine Kontrastverbesserung erreicht werden kann. Insgesamt können zumindest 180 verschiedene Kombinationen zur Analyse herangezogen werden, um verschiedenartige Materialmixe auf den PCB analysieren zu können. Die einzelnen Farbbildinformationen können pixelweise miteinander multipliziert und normalisiert werden.

Das Verfahren beruht auf einer Aufteilung eines von einem PCB reflektierten oder durch ein PCB hindurchgestrahlten Lichts in einzelne Farbteile, so dass Farbteilbildinformationen des PCBs oder der zu analysierenden Oberfläche des PCBs extrahiert werden. Die Farben können unmittelbar von einer Lichtquelleneinrichtung erzeugt oder durch eine Bilderfassungseinrichtung gefiltert bzw. in einem Postprocessing-Schritt extrahiert werden. Liegen Farbteilbildinformationen des PCBs vor, so können diese in Analysebildinformationen umgewandelt, insbesondere die einzelnen Teilbildinformationen miteinander verrechnet oder in andere Farbräume transformiert und hiernach miteinander verrechnet und kombiniert werde. Die hiermit gewonnenen Analysebildinformationen werden mit Referenzbildinformationen, beispielsweise Informationen über eine Materialverteilung oder Informationen eines CAD-Modells der Leiterplatte verglichen, um PCB-Fehler, insbesondere Materialverteilungsfehler, Geometriefehler, Kurzschlüsse und dergleichen zu erkennen. Die Farbteilbildinformationen können aus einem abgestrahlten und auf der Platinenoberfläche reflektierten oder aus einem durchgestrahlten Licht nach Grundfarben erfasst werden. Beispielsweise kann als Grundfarbenbasis der RGB-Farbraum verwendet werden. Es kann jedoch auch ein anderer farbkomplementärer Farbraum verwendet werden. Es liegen Farbteilbildinformationen in Grundfarben, insbesondere in komplementären Grundfarben vor, die miteinander kombiniert werden können. Es ist denkbar, Farbteilbildinformationen von reflektierten und von durchstrahlendem Licht miteinander zu kombinieren. Die Farbteilbildinformationen können zusammengefasst als Vollfarbinformationen in einen anderen Farbraum, beispielsweise in einen HSV, HSB, HSY, HLS oder in einen CMYG, Lab, YIQ oder Graustufenbereich umgewandelt werden und die transformierten Bilddaten können beispielsweise mit den Farbbildinformationen verrechnet werden, die einzelnen Analysebildinformationen können miteinander verrechnet werden, um verschiedenfarbige Bildkombinationen bereit zu stellen. Je nach vorliegender Materialverteilung, insbesondere Material des PCBs, und Material der Leiterbahnen, beispielsweise Kupfer, Gold, Aluminium, Titan oder ähnlich leitenden oder nicht leitenden Materialien wie z.B. Dielektrika, Passivierungen oder Glas können verschiedene Farbbildinformationen miteinander kombiniert werden, um die entsprechenden Materialien und Strukturen kontrastreich darzustellen und Fehler besonders gut erkennen zu können.

Die Anwendung des Verfahrens und einer diesbezüglichen Vorrichtung eignet sich für jegliche Arten von PCBs, insbesondere für semitransparente PCBs, die als Trägersubstrat Glas, Keramik oder (semi-)transparenten Kunststoff verwenden. Insbesondere LTCC- oder HTCC-PCBs (Low Temperature Cofired Ceramics oder High Temperature Cofired Ceramics) oder vergleichbare PCBs. Diese können aufgrund des semitransparenten bzw. transparenten Trägers mittels des optischen Verfahrens analysiert werden. Das Verfahren eignet sich für eine Endkontrolle von rohen und fertig bestückten PCBs, aber auch zur Analyse von PCBs im Laufe des Herstellverfahrens, beispielsweise als Schichtscan bei der Herstellung von Multilayer-PCBs nach dem Aufbringen von einer weiteren Schicht eines Mehrschicht-PCBs. Somit lassen sich das Analyseverfahren und die -Vorrichtung sowohl für die Endkontrolle, als auch in einzelnen Herstellschritten eines PCBs zur Qualitätssicherung einsetzen.

Das Verfahren kann beispielsweise auch für eine Produktion von OLED-Substraten verwendet werden. Dort werden unterschiedliche Layer nicht durch ein Druckverfahren aufgebracht, sondern entstehen durch Belichtung und Ätzen einer PCB-Oberfläche.

Nach einem vorteilhaften Ausführungsbeispiel können Farbteilbilderfassungselemente der Bilderfassungseinrichtung die Farbteilbildinformationen unmittelbar erfassen. In diesem Ausführungsbeispiel wird vorgeschlagen, dass die Bilderfassungseinrichtung eine Kamera ist, die einzelne Farbteilbilderfassungselemente, d.h. einzelne Sensoren für die zu erfassenden Farbteilbildinformationen umfasst, beispielsweise im Falle eines RGB-Farbraums RGB-Sensoren, die dazu ausgelegt sind, Rote, Grüne oder Blaue Farbanteile zu erfassen. Hierzu können beispielsweise optische Farbfilter vor den Kamerasensoren vorgeschaltet werden und die Sensitivität der Bilderfassungselemente können für die entsprechenden Farbbereiche optimiert sein.

Alternativ hierzu kann die Bilderfassungseinrichtung eine Graustufenkamera sein, und die einzelnen Farbteilbildinformationen können als Helligkeitsinformationen eines von der Lichtquelleneinrichtung abgegebenen monochromatischen Lichts erfasst werden. So kann beispielsweise eine Graustufenkamera Licht der Lichtquelleneinrichtung erfassen, wobei die Lichtquelleneinrichtung ein monochromatisches Licht beispielsweise ein Rotlicht, ein Grünlicht und ein Blaulicht sequentiell oder additiv ausstrahlt. Die einzelnen Helligkeitswerte können je nach Zeitpunkt der Ausstrahlung des monochromatischen Lichts dieser Lichtfarbe zugeordnet werden. Graustufenkameras weisen eine höhere Helligkeitsauflösung auf und sind in der Lage, einzelne Helligkeitsschwankungen besser als Farbkameras auflösen. Sie sind günstiger und können schneller Bildinformationen aufnehmen als Farbzeilenkameras, so dass ein höherer Scandurchsatz erreicht werden kann.

Entsprechend einer vorteilhaften Weiterbildung der Erfindung kann das abgestrahlte Licht der Lichtquelleneinrichtung einen Farbteil oder eine Superposition von einer oder mehreren, insbesondere allen Farbteilen sein, wobei das Licht Farbanteile im sichtbaren Lichtspektrum und/oder im Ultraviolettspektrum, und/oder im Infrarotspektrum umfassen kann. Die Lichtquelleinrichtung kann monochromatisch ausgelegt sein und kann das abgestrahlte Licht als monochromatischen Farbteil oder Superposition von mehreren Farbteilen aussenden. Die Lichtquelleneinrichtung kann alternativ ein Weißlicht aussenden, wobei die einzelnen Farbteilbildinformationen von einer Farbkamera erfasst werden können. Es ist denkbar, dass das Licht in einem speziellen Bereich von Ultraviolett oder Infrarot ausgestrahlt wird, um in diesem Frequenzbereich weitere Informationen, beispielsweise die Auflösung von kleinen Strukturen, erfassen zu können. Auch kann eine Kombination von Lichtanteilen aus dem Infrarotspektrum mit Lichtanteilen aus dem Farbspektrum zusätzliche Detailgenauigkeiten bieten.

Die Farbanteile können grundsätzlich beliebig gewählt werden. Besonders vorteilhaft können die Farbteile entsprechend einer zu erwartenden Materialverteilung oder Reflektions- und Transmissionseigenschaft der verwendeten Materialen des PCBs ausgewählt werden. Beispielsweise bietet blaues und gelbes Licht für einen Goldlayer einen hohen Farbkontrast. Dabei bietet es sich an, dass die Farbteile Komplementärfarben, insbesondere RGB-Farben und/oder IR- und/oder UV-Farben sind, und die Farbteilbildinformationen Rot-, Grün- und Blaubildinformationen oder Kombinationen davon sind, wobei bevorzugt die Lichtquelleneinrichtung und/oder die Bilderfassungseinrichtung in einem getakteten Betrieb mit 20kHz bis 200kHz, insbesondere 40kHz bis 100kHz betrieben wird, und das Licht durch die Lichtquelleneinrichtung und/oder die Bilderfassungseinrichtung polarisationsgefiltert wird.

Es hat sich gezeigt, dass eine Nutzung von Infrarotlicht vorteilhaft bei einer Untersuchung von nassen organischen Oberflächen ist, die durch einen nachfolgenden Sinterprozess gesintert werden und die hierbei organischen Bestandteile verlieren. Bei einem weiteren Bedrucken desselben Materials an der selben Position kann der feuchte Neudruck durch die Nutzung von Infrarotlicht von dem vorherigen, darunter liegendem Druck deutlich unterschieden werden und somit schlecht gedruckte Positionen sehr genau detektiert werden. Durch eine Beleuchtung in unterschiedlichen Winkel können Positionen, die bei nasser Paste zu Vollreflexion führen, herausgerechnet werden. Es ist während des Scans immer bekannt, welche Beleuchtungsfarbe und-position aktiv ist. Hierdurch können überbelichtete Pixel durch eine Information eines anderen Lichtwinkels ersetzt werden. Das Verfahren wird somit robuster gegenüber der Detektion von nasser Paste.

Insbesondere RGB-Bildinformationen bieten sich als Farbteilbildinformationen an, da RGB-Lichtelemente insbesondere monochromatische LED-Stripes und RGB-Farbzeilenkameras mit hohen Auflösungen kostengünstig zur Verfügung stehen. Des Weiteren können derartige Lichtquelleneinrichtungen in der Intensität gedimmt werden, so dass verschiedene Helligkeitsinformationen im Analyselicht untergebracht werden können. Insbesondere bei der Verwendung einer Graustufenkamera bietet es sich an, die Lichtquelleinrichtung und/oder die Kameraeinrichtung in einem getakteten Betrieb von 20 bis 200kHz zu betreiben, um sequentiell Farbteilbildinformationen der verschiedenen Farbteile aufzunehmen, um diese anschließend kombinieren zu können. Vorteilhafterweise wird das Licht der Lichtquelleneinrichtung und/oder der Bilderfassungseinrichtung polarisationsgefiltert, um Spiegelungseffekt auszublenden und die Auflösung und Schärfe der erhaltenen Farbteilbildinformationen zu verbessern.

Grundsätzlich kann das Licht der Lichtquelleneinrichtung senkrecht auf die Oberfläche des PCBs fallen. Es hat sich weiterhin als vorteilhaft erwiesen, dass das Licht der Lichtquellen in einem vordefinierbaren Winkel fällt, um Schatteneffekte auszunutzen. So können beispielsweise mehrere Lichtquellen aus verschiedenen Winkeln auf die PCB-Oberfläche fallen, um Schatten zu eliminieren, oder Schatteneffekte, die bei geradem Lichteinfall auftreten, zu umgehen. Hierzu kann es vorteilhaft sein, die Lichtquelleneinrichtung mit mehreren, aus verschiedenen Winkel leuchtenden Lichtquellen auszurüsten, oder diese gekrümmt oder verfahrbar einzurichten.

Es bietet sich an, die Auswahl der Farbteile, d.h. des Farbraums in Abhängigkeit von den zu analysierenden Materialien des PCBs zu treffen. So kann beispielsweise als Basis der RGB-Farbraum dienen, jedoch kann bei einer guten Reflektivität von bestimmten Materialen auf Gelb, Orange oder Weiß die RGB-Farben dementsprechend zur Aufnahme von Farbteilbildinformationen gemischt werden, um ein Gelbbild, ein Weißlichtbild oder ein Orangebild des PCBs aufzunehmen. Dieses wird in einen HSV-Farbraum transformiert und kann anschließend mit Farbteilbildinformationen des aufgenommenen Gelb-, Orange- oder Weißbildes vermischt werden. Somit lassen sich eine sehr hohe Anzahl verschiedener Analysebildinformationen bereitstellen, die angepasst an den jeweiligen Materialmix des PCBs durch Vergleich mit Materialverteilungsdaten und PCB/CAD-Daten oder Referenzdaten eines "Ideal-PCBs" gewonnen werden können. So eignen sich insbesondere Gelb und Blau zur Analyse von Goldstrukturen, so dass ein Farbraum auf Basis dieser Farben optimal für eine Goldstrukturanalyse verwendet werden kann. Hiermit lassen sich mit hoher Genauigkeit PCB-Herstellfehler erkennen.

In einem nebengeordneten Aspekt betrifft die Erfindung eine Vorrichtung zur optischen Analyse eines PCBs, die bevorzugt zur Durchführung eines Verfahrens nach einem der vorgenannten Ausführungsbeispiele dient. Die Vorrichtung umfasst eine Bilderfassungseinrichtung, eine Lichtquelleneinrichtung, eine Bildverarbeitungseinrichtung und eine PCB-Aufnahmeeinrichtung. Die Bilderfassungseinrichtung ist eingerichtet, Farbteilbildinformationen eines von der Lichtquelleneinrichtung auf einer Oberfläche eines in der Aufnahmeeinrichtung aufgenommen PCBs als reflektiertes Licht und/oder eines das PCB durchstrahlendes Licht getrennt nach Grundfarben zu erfassen. Die Bildverarbeitungseinrichtung ist eingerichtet, zumindest eine Farbteilbildinformation, insbesondere zwei oder mehrere Teilbildinformationen, in Analysebildinformationen umzuwandeln, wonach die Analysebildinformationen mit Referenzbildinformationen verglichen und PCB-Fehler erkannt werden können. Durch den Vergleich von Analyse- und Referenzbildinformationen ist eine PCB-Herstellqualität bestimmbar. Die PCB-Aufnahmeeinrichtung dient dazu, das PCB relativ zur Bilderfassungseinrichtung und Lichtquelleneinrichtung zu verschieben. Hierbei kann angedacht werden, die Lichtquelleneinrichtung und die Bildverarbeitungseinrichtung entlang des PCBs zu verfahren, jedoch ist es insbesondere vorteilhaft, das PCB, beispielsweise in Art eines Fließbandes unter bzw. zwischen Lichtquelleneinrichtung und Bildverarbeitungseinrichtung hindurch zu schieben. Bevorzugt wird zur Relativbewegung ein schwingungs- und vibrationsarmer elektromechanischer, hydraulischer oder pneumatischer Linearantrieb, z.B. Linearmotor oder dergleichen verwendet. Vorteilhafterweise wird die Bildaufnahmeeinrichtung und Lichtquelleneinrichtung gegenüber dem PCB für einen Analysescan verfahren. Durch die Geschwindigkeit der Bilderfassung kann entsprechend eine Transportgeschwindigkeit der Aufnahmeeinrichtung eingestellt werden. Auch sind wiederholende Analysen und mehrmaliges Durchfahren des PCBs unter den Analysebereich mittels der PCB-Aufnahmeeinrichtung möglich. Die Bilderfassungseinrichtung kann eine Farbzeilen- oder eine Graustufenkamera sein, insbesondere eine Linienkamera bzw. eine Zeilenscankamera. Die Lichtquelleneinrichtung kann insbesondere eine RGB-Farb-LED-Leiste mit vorgeschalteter Optik sein. Vor der Bilderfassungseinrichtung und/oder der Lichtquelleinrichtung können Polarisationsfilter angeordnet sein. Die Bildverarbeitungseinrichtung steuert die Lichtquelleneinrichtung und nimmt die Daten der Bilderfassungseinrichtung auf, und kann diese beispielsweise entsprechend dem oben genannten Verfahren derart verarbeiten, so dass verschiedene Farbteilbildinformationen zur Analysebildinformation kombiniert und mit Referenzbildinformationen verglichen werden können, um eine PCB-Herstellqualität zu erkennen. Dabei können eingestellte Fehlerschranken, beispielsweise Materialverteilungsabweichungen, eine Kurzschlussdetektion oder Geometriefehler eingestellt werden, um ein PCB als fehlerhaft zu kennzeichnen.

Erfindungsgemäß umfasst die Bildverarbeitungseinrichtung eine Farbraumtransformationseinheit, die von der Bilderfassungseinrichtung erfasste Farbteilinformationen in Analysebildinformationen in einen HSV-Farbraum transformieren kann, eine Vergleichseinheit, die die Analysebildinformationen insbesondere unter Nichtbeachtung von Intensitätswerten und unter Kombination der Analysebildinformation mit Farbteilinformationen mit Referenzbildinformationen, insbesondere mit PCB-CAD-Daten und Materialverteilungsdaten vergleicht, und eine Beurteilungseinheit, die auf Basis des Vergleichsergebnisses eine PCB-Herstellqualität bestimmen kann.

Es wird weiterhin erfindungsgemäß vorgeschlagen, dass die Bildverarbeitungseinrichtung, die zum einen die Lichtquelleneinrichtung steuern kann, zum anderen die Farbteilbildinformation der Bilderfassungseinrichtung aufnimmt, eine Farbraumtransformationseinheit umfasst. Die Farbraumtransformationseinheit dient dazu, die Farbteilbildinformation in einen anderen Farbraum, beispielsweise in einen HSV-Farbraum zu transformieren. Vorbereitend vor der Transformation können einzelne Farbbildinformationen zusammengefasst zu einem kombinierten RGB-Bild verrechnet werden. Dieses kann in einen HSV-Raum überführt werden und die daraus resultierenden drei Farbinformationen H, S, V können einzeln mit Farbteilbildinformationen oder mit sich selbst kombiniert werden, insbesondere multipliziert und skaliert werden, um Analysebildinformationen bereit zu stellen. Vorteilhafterweise bleibt der Helligkeitswert unbeachtet, da dessen Information für Analysezwecke redundant ist. Durch Verwendung einer Durchstrahlbeleuchtung bzw. eines Unterlichts wird optisch ein Kontrast einer PCB-Struktur erhöht. Durch die Analyse von Intensitätswerten kann eine Normalisierung einzelner Pixelwerte erreicht werden, so dass diese unabhängig vom Beleuchtungszustand untersucht werden können. Die Durchstrahlbeleuchtung kann bei Erfassung eines RGB-Bildes optisch zur Erhöhung eines Kontrastes verwendet werden, oder nachträglich können mittels der Durchstrahlbeleuchtung gewonnene Bilddaten auf der Bilddatenverarbeitungsseite zur Kontrasterhöhung verrechnet werden. Somit kann eine Farbintensität durch die Durchstrahl-Beleuchtungseinrichtung voreingestellt bzw. normiert werden, so dass im Bilddatenbereich nach einer Transformation der Bilddaten in einen HSV-Raum Intensitätswerte nicht berücksichtigt werden müssen. Somit wird ein für Analysezwecke zu verarbeitender Datenstrom verringert und die Analysegeschwindigkeit erhöht.

Die Vergleichseinheit kann die Analysebildinformationen mit Referenzbildinformationen insbesondere mit Gerberdaten oder CAD-Daten des PCBs und Materialverteilungsdaten vergleichen, um Abweichungen festzustellen und anhand des Grads der Abweichung einen PCB-Fehler zu erkennen. Die Beurteilungseinheit nimmt den Grad der Abweichung auf und beurteilt die Qualität des PCBs, so dann erkannt werden kann, ob das PCB verworfen oder weiter in der Produktion verwendet werden kann.

Gemäß einer vorteilhaften Weiterbildung der Vorrichtung kann die PCB-Aufnahmeeinrichtung eine relative Verschiebung des PCBs gegenüber der Bilderfassungseinrichtung und der Lichtquelleneinrichtung (16) durchführen, beispielsweise in Form eines Fließbandes, einer Förderkette, einer Drehscheibe oder ähnlichem. Hierdurch wird ein automatisierter Inspektionsablauf ermöglicht, der in einen automatisierten Herstellprozess integriert werden kann. Es bietet sich an, einen schwingungs- bzw. vibrationsarmen Linearantrieb zu verwenden, der insbesondere die Beleuchtungs- und Lichtquelleneinrichtung gegenüber dem PCB verfährt.

Es ist denkbar, dass zwei gegenüberliegende Bilderfassungseinrichtungen eine Ober- und eine Unterseite eines PCBs simultan scannen können, insbesondere können die jeweils dazugehörigen Lichtquelleinrichtungen als Durchschein-Lichtquelleneinrichtung der jeweils anderen Bilderfassungseinrichtung wirken. Hierdurch können insbesondere beidseitig bestückte PCBs analysiert werden, wobei die Analysequalität gesteigert bzw. ein nochmaliges Scannen einer zweiten Seite eines PCBs vermieden werden kann.

Vorteilhaft kann die Bilderfassungseinrichtung eine Graustufenerfassungseinrichtung, insbesondere Graustufenkamera sein, und die Lichtquelleneinrichtung kann monochromatische Farbanteile, insbesondere eine Superposition von monochromatischen Farbanteilen abgeben. Somit kann die Graustufenkamera Helligkeitsinformationen von dem momentanen abgestrahlten monochromatischen Farbanteil oder der abgestrahlten Farbe aufnehmen, so dass die Helligkeitsverteilung einem Farbwert zugeordnet werden kann, wobei eine Graustufenkamera eine hohe Helligkeitsauflösung bietet.

Alternativ hierzu kann die Bilderfassungseinrichtung eine Farbteileerfassungseinrichtung, insbesondere eine Farbzeilenkamera mit farbteilsensitiven Farbzeilen, insbesondere RGB-Farbenzeilen sein. So kann die Bilderfassungseinrichtung als Zeilenkamera insbesondere als Scannerkamera ausgelegt sein und einzelne Lichtzeilen für die jeweiligen Farbteile, die von der Lichtquelleneinrichtung ausgestrahlt werden können, umfassen. Die Lichtquelleneinrichtung kann Weißlicht abstrahlen, die alle Farbteile enthält, wobei durch Auswahl der entsprechenden Farbzeilen die einzelnen Farbteilbildinformationen gewonnen werden können. Somit kann mit oder ohne ein hochfrequentes Umschalten der Lichtfarben kontinuierlich die Farbteilinformation erzeugt werden.

Die Lichtquelleneinrichtung kann zumindest teilweise entlang einer geschlossenen Umfangslinie, insbesondere kreisförmig, rechteckförmig oder elliptisch die Bilderfassungseinrichtung umgeben, wobei bevorzugt zumindest Teile der Lichtquelleneinrichtung und/oder der Bilderfassungseinrichtung eine Polarisationseinheit umfassen, und wobei bevorzugt zumindest Teile der Lichtquelleneinrichtung und/oder der Bilderfassungseinrichtung in einem getakteten Schaltbetrieb mit einer Taktfrequenz von 20kHz bis 200kHz, insbesondere 40kHz bis 100kHz einen Farbwechselscan durchführen können. Die Lichtquelleneinrichtungen sind symmetrisch um die Bilderfassungseinrichtung angeordnet, beispielsweise kann eine Kamerascanzeile von zwei LED-Lichtleisten umgeben sein, oder eine Flächenkamera ringförmig oder quadratisch von einem Ring von Lichtquellen insbesondere einem LED-Lichtring umgeben sein. Je homogener die Ausleuchtung insbesondere bei den Lichtquellen, die für die reflektierten Lichtanteile verantwortlich sind, umso besser können Farbteilbildinformationen detailreich erfasst werden.

Das Licht der Lichtquelleneinrichtung fällt in der Regel senkrecht auf die PCB-Oberfläche. Die Lichtquelleneinrichtung kann allerdings mehrere Lichtquellenelemente aufweisen, die in verschiedenen Winkeln Licht auf die PCB-Oberfläche abstrahlen, um Schatteneffekte zu eliminieren oder diese zur Analyse auszunutzen. So kann die Lichtquelleneinrichtung gegenüber der PCB-Oberfläche kreisförmig verfahrbar oder positionsveränderlich sein, oder Lichtquellenelemente können gekrümmt oder abgewinkelt zur Platinenoberfläche angeordnet sein.

Eine unterhalb des PCBs angeordnete Lichtquelle für durchscheinendes Licht ist in vorteilhafter Weise gegenüber der Bilderfassungseinrichtung gespiegelt angeordnet. Mittels einer Polarisationseinheit können unerwünschte Parallaxenfehler oder Reflexionen ausgeblendet werden. Durch einen getakteten Schaltbetrieb können einzelne Farbteilinformationen nach einander aufgenommen werden, um getrennt erfasst und verarbeitet werden zu können. Hierzu kann ein Schaltbetrieb von 20 bis 200 kHz angedacht sein, wobei insbesondere LED-Lichtquellenelemente eine derartig hohe Schallfrequenz aufweisen können.

Eine Flächenkamera kann derart ausgelegt sein, dass nur eine vorbestimmbare Anzahl von Zeilen ausgelesen werden können, so dass diese wahlweise wie eine Zeilenkamera oder Flächenkamera nutzbar ist. Hierdurch kann die Scangeschwindigkeit erhöht werden. Es ist weiterhin möglich, beispielsweise alle Farbinformationen einer Bildaufnahme direkt aus einer Zeile der Flächenkamera auszulesen, wobei eine bestimmte Zeile eine einzelne Farbwertinformation ausliest, und in schneller Frequenz verschiedene Farben durchgeschaltet werden, die die Reaktionszeit der Flächenkamera an sich übersteigen würde. Auch können alle Farbinformationen bei einer Bildaufnahme direkt ausgelesen werden, z.B. bei einer Beleuchtung mit fünf verschiedenen Farbwerten.

Entsprechend einer vorteilhaften Weiterbildung der Erfindung kann das zu analysierende PCB zwischen Bilderfassungseinrichtung und zumindest einem Teil der Lichtquelleneinrichtung angeordnet sein, so dass ein durch das PCB durchstrahlendes Licht von der Bilderfassungseinrichtung erfasst wird, und das durchstrahlende Licht bevorzugt ein Weißlicht ist. Insbesondere als Weißlicht kann als durchstrahlendes Licht zur Kontrastverbesserung zu den aufgenommenen RGB-Farbteilbildinformationen von reflektierten Lichtanteilen hinzugefügt werden. So können einzelne RGB-Farbteilbildinformationen gewonnen und eine Transparentbildinformation auf Basis von Weißlicht gewonnen werden, und die einzelnen Farbanteile können mit der Transparentfarbbildinformation zur Verbesserung des Bildkontrastes verrechnet werden. Anstelle des Weißlichts kann eine Mehrfarblichtquelle für das durchstrahlende Licht eingesetzt werden, um ein monochromatisches Licht durch das PCB fallen zu lassen.

Sind sogenannte "fiducials", d.h. Ausrichtmarkierungen (fids) auf einem PCB angeordnet, kann eine Bildverarbeitungseinrichtung optische Verzerrungen, Translationen, Rotationen, Dehnungen, Quetschungen erkannt und mittels einer Bildkorrektureinrichtung ausgleichen bzw. korrigieren. Das Verfahren kann somit vor- oder auch nach einer Erstellung von Analysebildinformationen eine optische Korrektur des aufgenommenen Bildes der Bilderfassungseinrichtung vornehmen.

Das Verfahren und die Vorrichtung können insbesondere dazu verwendet werden, um Kurzschlüsse zu entdecken, einen Leitungspfad zu detektieren, der in sich geschlossen ist, eine fehlende Pastenbenetzung an Boundingstellen zu erkennen, lokale Abweichungen der Leiterbahnen oder Beschädigungen der Leiterbahnen oder der Leitungsstrukturierung zu detektieren und insbesondere nach dem Aufbringen von noch feuchter Lötpaste deren Verteilungen auf den Lötpads zu analysieren.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: ein erstes Ausführungsbeispiel einer erfindungsgemäßen Inspektionsvorrichtung;
- **Fig. 2**: eine schematische Draufsicht auf ein Ausführungsbeispiel einer Inspektionsvorrichtung;
- **Fig. 3**: eine Draufsicht auf eine Ausführungsform einer weiteren Inspektionsvorrichtung;
- **Fig. 4**: ein Blockdiagramm einer Bildverarbeitungseinrichtung für eine Ausführungsform einer Inspektionsvorrichtung;
- **Fig. 5**: ein weiteres Ausführungsbeispiel einer Inspektionsvorrichtung;
- **Fig. 6**: ein weiteres Ausführungsbeispiel einer Inspektionsvorrichtung;
- **Fig. 7**: schematisch ein Ausführungsbeispiel eines Verfahrensablaufs zur Inspektion eines PCBs.

In den Figuren bezeichnen gleiche Bezugsziffern gleiche oder gleichartige Merkmale der Erfindung.

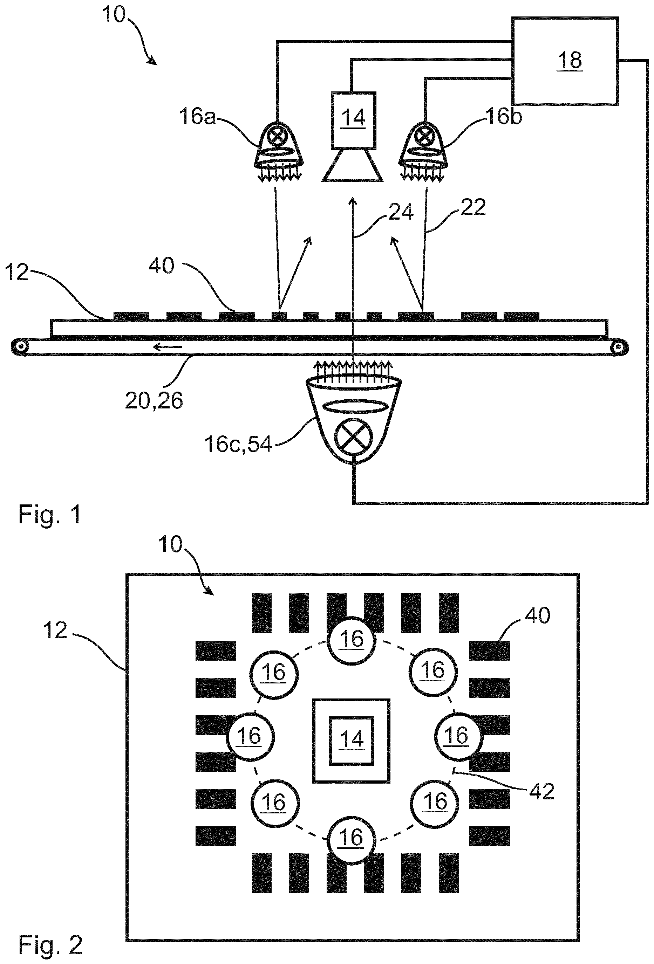

In der Fig. 1 ist ein erstes Ausführungsbeispiel 10 einer erfindungsgemäßen Analysevorrichtung dargestellt. Die Analysevorrichtung 10 umfasst eine Bilderfassungseinrichtung 14, die als Zeilenkamera oder als Flächenkamera ausgestaltet sein kann. Symmetrisch um die Bilderfassungseinrichtung 14 sind zwei Lichtquelleneinrichtungen 16a, 16b derart angeordnet, dass deren ausstrahlendes Licht 22 von einem PCB 12 in die Bilderfassungseinrichtung 14 reflektiert wird. Die Lichtquelleneinrichtungen 16 können neben einem Leuchtmittel beispielsweise einer LED-Zeile Fokussierungselemente wie Linsen und Polarisationsfilter umfassen. Das reflektierte Licht 22 fällt von einer PCB 12 in die Bilderfassungseinrichtung 14 und wird dort aufgenommen. Unterhalb des PCBs 12 und symmetrisch zur Bilderfassungseinrichtung 14 ist eine Weißlicht durchstrahlende Beleuchtungseinrichtung 54, 16c angeordnet. Licht von unten kann durch ein semitransparentes PCB 12 strahlen, das ebenfalls von der Bilderfassungseinrichtung 14 aufgenommen werden kann. Die Beleuchtungseinrichtungen 16a, 16b und 16c werden von einer Bildverarbeitungseinrichtung 18 gesteuert. Des Weiteren steuert die Bildverarbeitungseinrichtung 18 eine PCB Transporteinrichtung 26, die in einer PCB-Aufnahmeeinrichtung 20 umfasst ist, und die das PCB 12 relativ gegenüber der Bilderfassungseinrichtung 14 und den Lichtquelleneinrichtungen 16a, 16b und 16c verschieben kann. Somit kann mit hoher Geschwindigkeit eine große Zahl von PCBs 12 durch die Analysevorrichtung 10 überprüft werden. Die Bildverarbeitungseinrichtung 18 kann die Lichtfarbe der Lichtquelleneinrichtungen 16a, 16b und 16c steuern und insbesondere ein Weißlicht, das als durchstrahlendes Licht 24 durch die PCB-Platine in die Bilderfassungseinrichtung 14 fällt, zuschalten, um den Kontrast der Einzel aufgenommenen Farbteilbildinformationen zu verbessern.

In der Fig. 2 ist eine Draufsicht auf ein Ausführungsbeispiel einer Analysevorrichtung 10 dargestellt, in der eine Flächenkamera 14 kreisförmig von einzelnen Lichtquelleneinrichtungen 16 umfasst ist, um ein PCB 12 homogen auszuleuchten. Dabei werden insbesondere Lage und Form von Boundpads 40 auf dem PCB 12 analysiert. Die Lichtquelleneinrichtungen 16 sind entlang einer geschlossenen Umfangslinie 42 um die Flächenkamera 14 angeordnet, um eine homogene Ausleuchtung des zu analysierenden Teilbereichs des PCBs 12 zu gewährleisten.

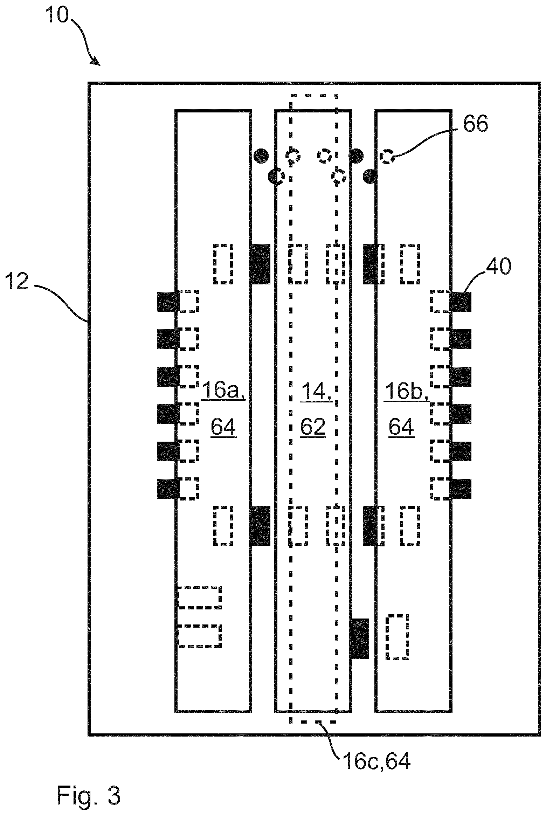

Alternativ hierzu ist in der Fig. 3 eine weitere Draufsicht auf ein Ausführungsbeispiel einer Analysevorrichtung dargestellt. Diese umfasst eine als Zeilenkamera 62 ausgebildete Bilderfassungseinrichtung 14, die auf beiden Seiten in Richtung eines Transportweges des PCBs 12 von LED-Zeilen 64 als Lichtquelleneinrichtungen 16a und 16b flankiert sind. Die LED-Zeilen 64 sind derart ausgerichtet, dass ein reflektiertes Licht 22 mit einer gleichmäßigen Ausleuchtung in die Bilderfassungseinrichtung 14 reflektiert wird. Symmetrisch gegenüberliegend der Zeilenkamera 62 ist eine Weißlicht LED-Stripleiste 64 auf der Unterseite des PCBs 12 angeordnet, die zur Kontrasterhöhung ein durchstrahlendes Licht 24 durch die Platine 12 aussendet. Mittels einer langgestreckten Zeilenkamera 62 und LED-Lichtleisten 64 können große Bereiches des PCBs 12 effektiv analysiert und sequentiell verarbeitet werden, so dass eine hohe Genauigkeit der PCB-Produktionsqualität eingehalten werden kann.

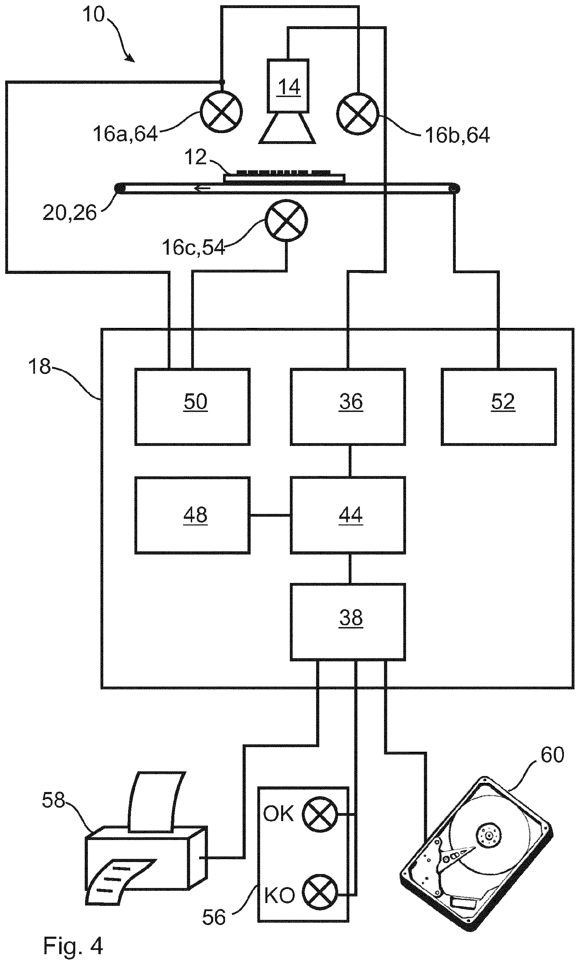

In der Fig. 4 ist schematisch die innere Struktur einer Bildverarbeitungseinrichtung 18 eines Ausführungsbeispiels einer Analysevorrichtung 10 dargestellt. Die Bildverarbeitungseinrichtung 18 umfasst eine Farbtransformationseinheit 36, die Bilder einer Bilderfassungseinrichtung 14 empfängt und diese in einen anderen Farbraum, beispielsweise einen HSV-Farbraum transformieren kann. Eine Vergleichseinheit 44 empfängt die transformierten Bilder und die Farbteilbildinformationen der Bilderfassungseinrichtung 14 und kann diese kombinieren, beispielsweise pixelweise multiplizieren und normieren. Eine Beurteilungseinheit 38 empfängt die gewonnene Analysebildinformation und vergleicht diese mit Referenzbildinformationen, die aus einer Referenzbildspeichereinheit 48 zur Verfügung gestellt werden können. Die Referenzbildinformationen können beispielsweise CAD-Daten des PCB-Layouts wie Gerberdaten und Materialverteilungsdaten, d.h. Art und Verteilung des von verschiedenartigen Materialen innerhalb des PCBs, umfassen. Eine Vergleichseinheit 44 ist mit der Referenzbildspeichereinheit 48 verbunden und vergleicht die Analysebildinformationen mit Referenzbildinformationen und gibt den Grad der Abweichung an die Beurteilungseinheit 38, die auf Basis der Abweichung eine Beurteilung abgibt, ob ein PCB 12 der Herstellungsqualität entspricht oder verworfen werden muss. Angeschlossen an die Bilderverarbeitungseinrichtung 18 ist beispielsweise eine Protokollierungseinrichtung 58 in Form eines Druckers, eine optische Signalisierungseinrichtung 56, die einem Bediener anzeigt, ob ein PCB 12 fehlerfrei oder fehlerbehaftet ist, und eine Speichereinheit 60 zur elektronischen Protokollierung der Herstellqualität des PCBs 12 sein. Die Bildverarbeitungseinrichtung 18 umfasst des Weiteren eine Lichtquellensteuerungseinheit 50, die eine Lichtfrequenz oder eine Lichtfarbe der angeschlossenen Lichtquelleneinrichtungen 16 steuern kann. Die Lichtquelleneinrichtungen 16a, 16b sind als LED-Stripleisten ausgeführt, die ein RGB-Licht erzeugen können. Die unterhalb des PCBs 12 angeordnete Durchstrahlbeleuchtungseinrichtung 54 kann als Weißlicht-LED ausgebildet sein, und die Bilderfassungseinrichtung 14 kann als Zeilenkamera beispielsweise als Graustufen- oder Farbzeilenkamera 62 ausgebildet sein. Schließlich umfasst die Bildverarbeitungseinrichtung 18 eine PCB-Vorschubsteuerungseinheit 52, die einen Vorschub einer PCB 12 bzw. die zur Verfügungsstellung einer weiteren zu prüfenden PCB 12 steuert. Die PCB-Vorschubeinheit 52 ist an eine PCB-Transporteinrichtung 26 der PCB-Aufnahmeeinrichtung 20 angeschlossen, die den Transportvorgang steuert.

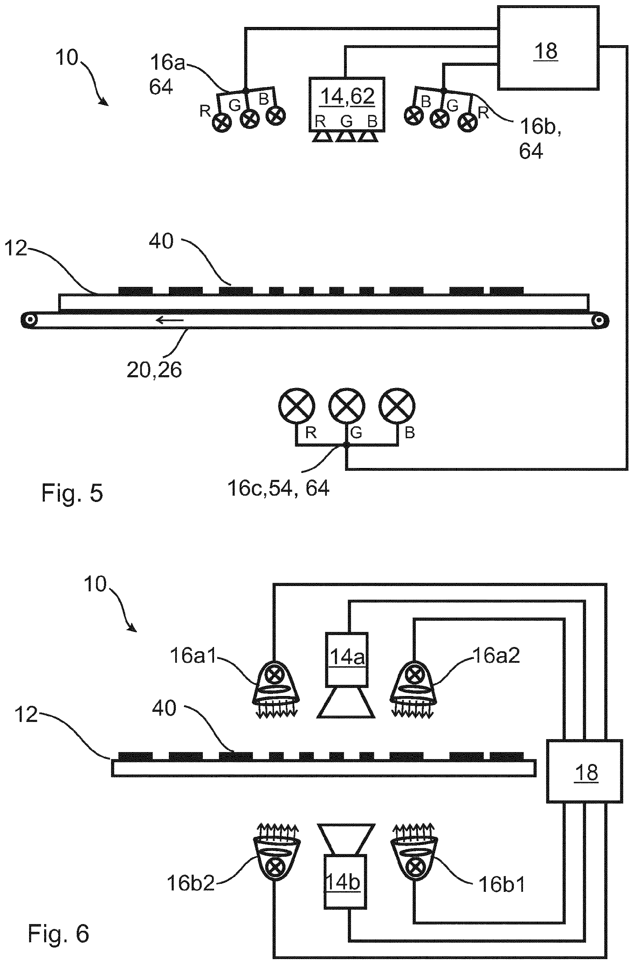

In der Fig. 5 ist entsprechend der Darstellung der Fig. 1 ein weiteres Ausführungsbeispiel einer Analysevorrichtung 10 dargestellt. Hierbei umfassen die Lichtquelleneinrichtungen 16a, 16b Mehrfarb-LED-Stripleisten 64 und die Durchstrahlbeleuchtungseinrichtung 54 ist ebenfalls als Mehrfarb-LED-Stripleiste 16c, 64 ausgebildet.

Die Fig. 6 zeigt ebenfalls entsprechend der Darstellung der Fig. 1 ein weiteres Ausführungsbeispiel einer Analysevorrichtung 10. Im Gegensatz zur Vorrichtung nach Fig. 1 sind auf einer Ober- und einer Unterseite eines zu analysierenden PCBs 12 Bildererfassungseinrichtungen 14a bzw. 14b sowie Lichtquelleneinrichtungen 16a1, 16a2 bzw. 16b1 und 16b2 angeordnet. Mittels diesem Ausführungsbeispiel können insbesondere beidseitig bestückte PCBs untersucht werden, auch lassen sich die Datenraten der beiden Bilderfassungseinrichtungen bei gleicher Auflösequalitität heruntersetzen, dazu müssen allerdings zwei Bilddatenströme simultan verarbeitet werden. Eine Durchstrahl-Beleuchtungseinrichtung 54 entfällt, da für die Erzeugung eines Durchlichtes, insbesondere zur Kontrasterhöhung, die jeweiligen gegenüberliegenden Lichtquelleneinrichtungen 16a bzw. 16b verwendet werden können. Insbesondere beidseitig bestückte PCBs können mit hoher Genauigkeit analysiert werden, wobei beidseitig mittels Durchstrahl-Beleuchtung der gegenüberliegenden Lichtquelleneinrichtungen Bilddaten mit kontrastverbesserter Beleuchtung aufgenommen werden können.

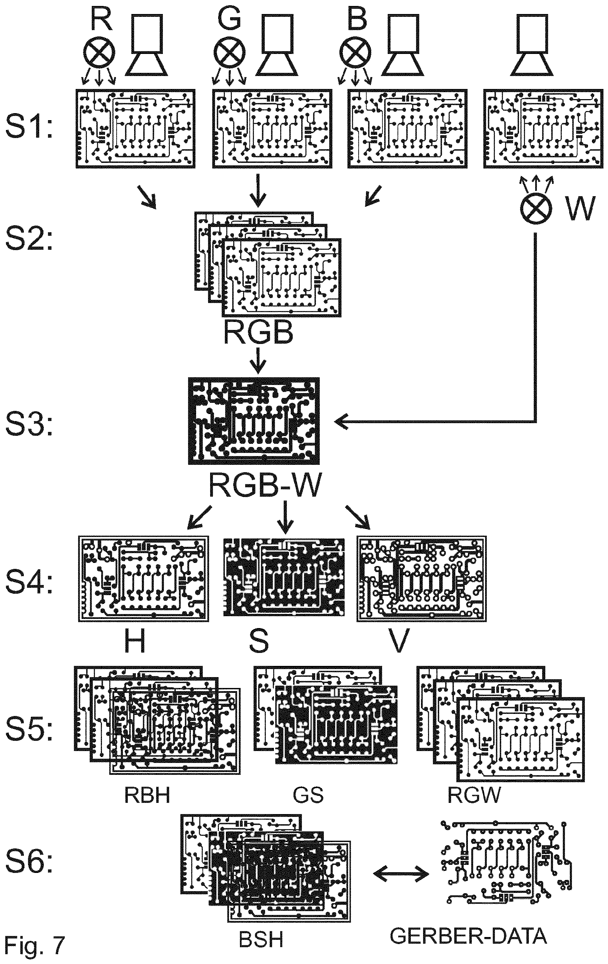

Schließlich zeigt die Fig. 7 in Art eines Ablaufdiagramms einzelne Stufen eines Ausführungsbeispiels eines erfindungsgemäßen Verfahrens. In der Stufe S1wird ein PCB 12 mit verschiedenen Lichtfarben R, G, B von oben und einem Weißlicht W von unten bestrahlt und die aufgenommenen Farbteilbildinformationen von einer Kamera 14 aufgenommen. Im Schritt S2 werden die einzelnen Farben der RGB-Teilfarbbilder zusammengesetzt zu einem RGB-Farbbild, wobei im Schritt S3 zur Kontrastverbesserung Farbbildinformationen des durchstrahlenden Weißlichts hinzugefügt werden. Aus dem RGB-Bild mit Kontrasterhöhung wird durch eine Farbtransformation Teilbilder im HSV-Raum erzeugt, die Farbintensität, Sättigung und Farbverteilung wiedergeben. Im Schritt S5 können die einzelnen Farbinformationen des HSV-Farbraums mit Farbteilbildinformationen des RGB-Raums kombiniert werden, um verschiedenfarbige Analysebildinformationen zu gewinnen. So sind beispielsweise drei Analysebilder, die sich aus Rot (R), Blau (B) und Hellwert (H), aus Grün (G) und Saturation (S), sowie aus Rot (R), Grün (G) und W (weißes Kontrastlicht von der Unterseite) dargestellt. Im Schritt S6 werden derartige Analysebildinformationen mit CAD-Daten, beispielsweise Gerberdaten oder Referenzdaten einer optimalen Platine verglichen, um eine abschließende Entscheidung treffen zu können, ob die Herstellqualität des PCBs den gewünschten Anforderungen entspricht oder nicht. An dieser Stelle wird z.B. ein Analysebild, das sich aus Blau (B), Saturation (S) und Hellwert (H) zusammensetzt, analysiert.

### Bezugszeichenliste

- 10: Analysevorrichtung
- 12: PCB
- 14: Bilderfassungseinrichtung
- 16: Lichtquelleneinrichtung
- 18: Bildverarbeitungseinrichtung
- 20: PCB-Aufnahmeeinrichtung
- 22: Reflektiertes Licht von PCB-Oberfläche
- 24: Durchstrahlendes Licht durch PCB-Platine
- 26: PCB-Transporteinrichtung
- 28: Graustufenerfassungseinrichtung
- 30: Monochromatische Lichtquelleneinrichtung
- 32: Farbzeilenkamera
- 34: RGB-Farbzeilen
- 36: Farbraumtransformationseinheit
- 38: Beurteilungseinheit
- 40: Boundpad
- 42: Geschlossene Umfangslinie um Bilderfassungseinrichtung
- 44: Vergleichseinheit
- 46: Lichtquellensteuereinheit
- 48: Referenzbildspeichereinheit
- 50: Lichtquellensteuerungseinheit
- 52: PCB-Vorschubsteuerungseinheit
- 54: Weißlicht Durchstrahl-Beleuchtungseinrichtung
- 56: Optische Signalisierungseinrichtung
- 58: Protokollierungseinrichtung
- 60: Speichereinrichtung
- 62: Zeilenkamera
- 64: LED-Stripleiste
- 66: Via / Connector Pad

## Patentansprüche

1. Verfahren zur optischen Analyse eines PCBs (Printed Circuit Board - Leiterplatte) (12), wobei eine Bilderfassungseinrichtung (14) Farbteilbildinformationen eines von einer Lichtquelleneinrichtung (16) auf einer Oberfläche des PCBs (12) reflektierten Lichts (22) und/oder durch das PCB (12) durchstrahlenden Lichts (24) getrennt nach Grundfarben erfasst, und eine Bildverarbeitungseinrichtung (18) die zumindest eine Farbteilbildinformation, insbesondere zwei oder mehrere Farbteilbildinformationen in Analysebildinformationen umwandelt, wonach die Analysebildinformationen mit Referenzbildinformationen verglichen und PCB-Fehler erkannt werden, so dass eine PCB-Herstellqualität bestimmbar ist, **dadurch gekennzeichnet, dass** die Bildverarbeitungseinrichtung (18) die Farbteilbildinformationen in einen HSV-Farbraum als Analysebildinformationen umgerechnet wobei Analysebildinformationen des HSV-Farbraums mit Farbteilbildinformationen kombiniert werden, wonach ein Vergleich der kombinierten Bildinformationen mit Referenzbildinformationen, insbesondere mit CAD-Daten und Materialverteilungsdaten, durchgeführt wird.

2. Verfahren nach Anspruch 1, **dadurch gekennzeichnet, dass** Farbteilbilderfassungselemente der Bilderfassungseinrichtung (14) die Farbteilbildinformationen unmittelbar erfassen.

3. Verfahren nach Anspruch 1 oder 2, **dadurch gekennzeichnet, dass** die Bilderfassungseinrichtung (14) Farbteilbildinformationen als Helligkeitsinformationen eines von der Lichtquelleneinrichtung (16) abgegebenen monochromatischen Lichts erfasst.

4. Verfahren nach einem der vorangegangenen Ansprüche, **dadurch gekennzeichnet, dass** das abgestrahlte Licht der Lichtquelleneinrichtung (16) einen Farbteil oder eine Superposition von einer oder mehreren, insbesondere aller Farbteile ist, wobei das Licht Farbanteile im sichtbaren Lichtspektrum und/oder im Ultraviolettspektrum, und/oder im Infrarotspektrum umfasst.

5. Verfahren nach einem der vorangegangenen Ansprüche, **dadurch gekennzeichnet, dass** die Farbteile Komplementärfarben, insbesondere RGB-Farben und/oder IR- und/oder UV-Farben sind, und die Farbteilbildinformationen Rot-, Grün- und Blaubildinformationen oder Kombinationen davon sind, wobei bevorzugt die Lichtquelleneinrichtung (16) und/oder die Bilderfassungseinrichtung (14) in einem getakteten Betrieb mit 20kHz bis 200kHz, insbesondere 40kHz bis 100kHz betrieben wird, und das Licht weiterhin bevorzugt durch die Lichtquelleneinrichtung (16) und/oder die Bilderfassungseinrichtung (14) polarisationsgefiltert wird.

6. Verfahren nach einem der vorgenannten Ansprüche, **dadurch gekennzeichnet, dass** die Auswahl der Farbteile in Abhängigkeit von den zu analysierenden Materialien des PCBs (12) getroffen wird.

7. Vorrichtung (10) zur optischen Analyse eines PCBs (Printed Circuit Board - Leiterplatte) (12), bevorzugt zur Durchführung eines Verfahrens nach einem der vorgenannten Ansprüche, umfassend eine Bilderfassungseinrichtung (14), eine Lichtquelleneinrichtung (16), eine Bildverarbeitungseinrichtung (18) und eine PCB-Aufnahmeeinrichtung (20), wobei die Bilderfassungseinrichtung (14) eingerichtet ist, Farbteilbildinformationen eines von der Lichtquelleneinrichtung (16) auf einer Oberfläche eines in der Aufnahmeeinrichtung (20) aufgenommen PCBs (12) reflektierten Lichts (22) und/oder eines das PCB (12) durchstrahlenden Lichts (24) getrennt nach Grundfarben zu erfassen, und die Bildverarbeitungseinrichtung (18) eingerichtet ist, zumindest eine Farbteilbildinformation, insbesondere zwei oder mehrere Farbteilbildinformationen, in Analysebildinformationen umzuwandeln, wonach ein Vergleich von Analysebildinformationen mit Referenzbildinformationen durchführbar ist und PCB-Fehler erkennbar sind, so dass eine PCB-Herstellqualität bestimmbar ist, **dadurch gekennzeichnet, dass** die Bildverarbeitungseinrichtung (18) eine Farbraumtransformationseinheit (36) umfasst, die eingerichtet ist, von der Bilderfassungseinrichtung (14) erfasste Farbteilinformationen in Analysebildinformationen in einen HSV-Farbraum zu transformieren, eine Vergleichseinheit (44) umfasst ist, die eingerichtet ist, Analysebildinformationen unter Kombination mit Farbteilbildinformationen als kombinierte Bildinformationen mit Referenzbildinformationen zu vergleichen, und eine Beurteilungseinheit (38) umfasst ist, die eingerichtet ist, auf Basis des Vergleichsergebnisses eine PCB-Herstellqualität zu bestimmen.

8. Vorrichtung nach Anspruch 7, **dadurch gekennzeichnet, dass** die PCB-Aufnahmeeinrichtung (20) eingerichtet ist, eine relative Verschiebung des PCBs (12) gegenüber der Bilderfassungseinrichtung (14) und der Lichtquelleneinrichtung (16) durchzuführen.

9. Vorrichtung nach einem der Ansprüche 7 oder 8, **dadurch gekennzeichnet, dass** die Bilderfassungseinrichtung (14) eine Graustufenerfassungseinrichtung (28), insbesondere Graustufenkamera ist, und die Lichtquelleneinrichtung (16, 30) eingerichtet ist, monochromatische Farbteile, insbesondere eine Superposition von monochromatischen Farbteilen abzugeben.

10. Vorrichtung nach einem der Ansprüche 7 oder 8, **dadurch gekennzeichnet, dass** die Bilderfassungseinrichtung (14) eine Farbteileerfassungseinrichtung, insbesondere eine Farbzeilenkamera (32) mit farbteilsensitiven Farbzeilen, insbesondere RGB-Farbenzeilen (34) ist.

11. Vorrichtung nach einem der Ansprüche 7 bis 10, **dadurch gekennzeichnet, dass** die Lichtquelleneinrichtung (16) zumindest teilweise entlang einer geschlossenen Umfangslinie (42), bevorzugt kreisförmig, rechteckförmig oder elliptisch die Bilderfassungseinrichtung (14) umgibt, und wobei bevorzugt zumindest Teile der Lichtquelleneinrichtung (16) und/oder der Bilderfassungseinrichtung (14) eine Polarisationseinheit umfasst, und wobei bevorzugt zumindest Teile der Lichtquelleneinrichtung (16) und/oder der Bilderfassungseinrichtung (14) eingerichtet sind, einen Farbwechselscan in einem getakteten Schaltbetrieb mit einer Taktfrequenz von 20kHz bis 200kHz, insbesondere 40kHz bis 100kHz durchzuführen.

12. Vorrichtung nach einem der Ansprüche 7 bis 11, **dadurch gekennzeichnet, dass** das zu analysierende PCB (12) zwischen Bilderfassungseinrichtung (14) und zumindest einem Teil der Lichtquelleneinrichtung (16) angeordnet ist, so dass ein durch das PCB (12) durchstrahlendes Licht (24) von der Bilderfassungseinrichtung (14) erfasst wird, wobei das durchstrahlende Licht (24) bevorzugt ein Weißlicht ist.

## Claims

1. Method for optical analysis of a PCB (printed circuit board) (12), where an image capture device (14) captures colour component image information sets of a light (22) reflected by a light source device (16) on a surface of the PCB (12) and/or by a light (24) radiating through the PCB (12) separately according to primary colours, and an image processing device (18) transforms at least one colour component image information set, in particular two or more colour component image information sets, to analysis image information sets, after which the analysis image information sets are compared with reference image information sets and PCB defects are detected, such that a PCB manufacture quality is determinable, **characterized in that** the image processing device (18) transforms the colour component image information sets into an HSV colour space as analysis image information sets, where analysis image information sets of the HSV colour space are combined with colour component image information sets, after which a comparison of the combined image information sets with reference image information sets is performed, in particular with CAD data and material distribution data.

2. Method according to claim 1, **characterized in that** colour component image capture elements of the image capture device (14) capture the colour component image information sets directly.

3. Method according to claim 1 or 2, **characterized in that** the image capture device (14) captures colour component image information sets as brightness information sets of a monochromatic light emitted by the light source device (16).

4. Method according to one of the preceding claims, **characterized in that** the emitted light of the light source device (16) is a colour component or a superposition of one or more, in particular all, colour components, where the light comprises colour components in the visible light spectrum and/or in the ultraviolet spectrum and/or in the infrared spectrum.

5. Method according to one of the preceding claims, **characterized in that** the colour components are complementary colours, in particular RGB colours and/or IR and/or UV colours, and the colour component image information sets are red, green and blue image information sets or combinations thereof, where preferably the light source device (16) and/or the image capture device (14) are operated in a cyclic operation at 20kHz to 200kHz, in particular at 40kHz to 100kHz, and the light is furthermore preferably polarization-filtered by the light source device (16) and/or the image capture device (14).

6. Method according to one of the above claims, **characterized in that** the selection of the colour components is made depending on the materials to be analysed of the PCB (12).

7. Device (10) for optical analysis of a PCB (printed circuit board) (12), preferably for performance of a method according to one of the above claims, comprising an image capture device (14), a light source device (16), an image processing device (18) and a PCB receiving device (20), where the image capture device (14) is set up to capture colour component image information sets of a light (22) reflected by the light source device (16) on a surface of a PCB (12) mounted in the receiving device (20) and/or of a light (24) radiating through the PCB (12) separately according to primary colours, and the image processing device (18) is set up to transform at least one colour component image information set, in particular two or more colour component image information sets, to analysis image information sets, after which a comparison of analysis image information sets with reference image information sets is performable and PCB defects are detectable, such that a PCB manufacture quality is determinable, **characterized in that** the image processing device (18) comprises a colour space transformation unit (36) set up to transform colour component image information sets captured in the image capture device (14) into an HSV colour space as analysis image information sets, a comparison unit (44) set up to compare analysis image information sets in combination with colour component image information sets as combined image information sets with reference image information sets, and an assessment unit (38) set up to determine a PCB manufacture quality on the basis of the comparison result.

8. Device according to claim 7, **characterized in that** the PCB receiving device (20) is set up to perform a relative displacement of the PCB (12) to the image capture device (14) and the light source device (16).

9. Device according to one of claims 7 or 8, **characterized in that** the image capture device (14) is a grayscale capture device (28), in particular a grayscale camera, and the light source device (16, 30) is set up to emit monochromatic colour components, in particular a superposition of monochromatic colour components.

10. Device according to one of claims 7 or 8, **characterized in that** the image capture device (14) is a colour component capture device, in particular a colour line scan camera (32) with colour component-sensitive colour lines, in particular RGB colour lines (34).

11. Device according to one of claims 7 to 10, **characterized in that** the light source device (16) surrounds the image capture device (14) at least partially along a closed circumferential line (42), preferably in a circular, rectangular or elliptical form, and where preferably at least parts of the light source device (16) and/or of the image capture device (14) comprise a polarization unit, and where preferably at least parts of the light source device (16) and/or of the image capture device (14) are set up to perform a colour change scan in a cyclic switching operation with a cycle frequency of 20kHz to 200kHz, in particular 40kHz to 100kHz.

12. Device according to one of claims 7 to 11, **characterized in that** the PCB (12) to be analysed is arranged between the image capture device (14) and at least one part of the light source device (16) such that a light (24) radiating through the PCB (12) is captured by the image capture device (14), where the light (24) radiating through is preferably a white light.

## Revendications

1. Procédé pour l'analyse optique d'un PCB (Printed Circuit Board - circuit imprimé) (12), sachant qu'un dispositif d'acquisition d'images (14) acquiert des informations de trame chromatique séparées par couleurs fondamentales, d'une lumière (22) provenant d'une source lumineuse (16) et se réfléchissant sur la surface du PCB (12) et/ou d'une lumière (24) traversant le PCB (12), et qu'un dispositif de traitement d'images (18) transforme en informations d'images d'analyse au moins une information de trame chromatique, notamment deux ou plusieurs informations de trame chromatique, puis les informations d'images d'analyse sont comparées aux informations d'images de référence et les erreurs du PCB sont détectées de manière à ce qu'une qualité de fabrication du PCB puisse être déterminée, **caractérisé en ce que** le dispositif de traitement d'images (18) convertit les informations de trame chromatique sous forme d'informations d'image d'analyse en un espace colorimétrique TSL, sachant que les informations d'image d'analyse de l'espace colorimétrique TSL sont combinées aux informations de trame chromatique, puis est réalisée une comparaison des informations d'image combinées aux informations d'image de référence, notamment avec des données CAO et des données de répartition des matériaux.

2. Procédé selon la revendication 1, **caractérisé en ce que** les éléments d'acquisition de trame chromatique du dispositif d'acquisition d'images (14) acquièrent directement les informations de trame chromatique.

3. Procédé selon la revendication 1 ou 2, **caractérisé en ce que** le dispositif d'acquisition d'images (14) acquiert des informations de trame chromatique sous forme d'informations de luminosité d'une lumière monochromatique émise par la source lumineuse (16).

4. Procédé selon une des revendications précédentes, **caractérisé en ce que** la lumière émise par la source lumineuse (16) est une composante chromatique ou une superposition d'une ou plusieurs, notamment de toutes les composantes chromatiques, sachant que la lumière comprend des composantes chromatiques dans le spectre lumineux visible et/ou dans le spectre ultraviolet et/ou dans le spectre infrarouge.

5. Procédé selon une des revendications précédentes, **caractérisé en ce que** les composantes chromatiques sont des couleurs complémentaires, notamment les couleurs RJB et/ou les couleurs IR et/ou UV, et que les informations de trame chromatique sont des informations de trame rouge, verte et bleue ou des combinaisons de celles-ci, sachant que la source lumineuse (16) et/ou le dispositif d'acquisition d'images (14) sont exploités de préférence dans un fonctionnement cadencé à une fréquence comprise entre 20 kHz et 200 kHz, notamment entre 40 kHz et 100 kHz et que la lumière subit, de préférence, un filtrage de polarisation par la source lumineuse (16) et/ou le dispositif d'acquisition d'images (14).

6. Procédé selon une des revendications précédentes, **caractérisé en ce que** le choix des composantes chromatiques est réalisé en fonction des matériaux à analyser sur le PCB (12).

7. Dispositif (10) pour l'analyse optique d'un PCB (Printed Circuit Board - circuit imprimé) (12), de préférence pour la réalisation d'un procédé selon une des revendications précédentes, comprenant un dispositif d'acquisition d'images (14), une source lumineuse (16), un dispositif de traitement d'images (18) et un support de PCB (20), sachant que le dispositif d'acquisition d'images (14), est configuré pour acquérir des informations de trame chromatique séparées par couleurs fondamentales, d'une lumière (22) provenant de la source lumineuse (16) et se réfléchissant sur la surface d'un PCB (12) logé dans le support (20) et/ou d'une lumière (24) traversant le PCB (12), et que le dispositif de traitement des images (18) est configuré pour convertir en des informations d'image d'analyse au moins une information de trame chromatique, notamment deux ou plusieurs informations de trame chromatique, puis une comparaison des informations d'image d'analyse aux informations d'image de référence peut être réalisée et les erreurs sur le PCB peuvent être détectées de manière à ce que puisse être déterminée une qualité de fabrication du PCB, **caractérisé en ce que** le dispositif de traitement d'images (18) comprend une unité de transformation d'espaces colorimétriques (36) qui est configurée pour transformer les informations de trame chromatique acquises par le dispositif d'acquisition d'images (14) en informations d'image d'analyse en un espace colorimétrique TSL, une unité de comparaison (44) qui est configurée pour comparer les informations d'image d'analyse, qui sont combinées aux informations de trame chromatique pour former des informations d'image combinées, aux informations d'image de référence, et une unité d'évaluation (38) qui est configurée pour déterminer une qualité de fabrication du PCB sur la base des résultats de la comparaison.

8. Dispositif selon la revendication 7, **caractérisé en ce que** le support de PCB (20) est configuré pour réaliser un déplacement relatif du PCB (12) par rapport au dispositif d'acquisition d'images (14) et à la source lumineuse (16).

9. Dispositif selon une des revendications 7 ou 8, **caractérisé en ce que** le dispositif d'acquisition d'images (14) est un dispositif d'acquisition des nuances de gris (28), notamment une caméra de nuances de gris et que la source lumineuse (16, 30) est configurée pour émettre des composantes monochromatiques, notamment une superposition de composantes monochromatiques.

10. Dispositif selon une des revendications 7 ou 8, **caractérisé en ce que** le dispositif d'acquisition d'images (14) est un dispositif d'acquisition de composantes chromatiques, notamment une caméra linéaire couleur (32) avec lignes de couleurs sensibles aux composantes chromatiques, notamment lignes de couleurs RJB (34).

11. Dispositif selon une des revendications 7 à 10, **caractérisé en ce que** la source lumineuse (16) entoure le dispositif d'acquisition d'images (14) au moins partiellement le long d'une ligne circonférentielle fermée (42), de préférence, de forme circulaire, rectangulaire ou elliptique et sachant que de préférence au moins des parties de la source lumineuse (16) et/ou du dispositif d'acquisition d'images (14) comprennent une unité de polarisation, et sachant que de préférence au moins des parties de la source lumineuse (16) et/ou du dispositif d'acquisition d'images (14) sont configurées pour réaliser un balayage des changements de couleur dans un fonctionnement cadencé à une fréquence de cadencement comprise entre 20 kHz et 200 kHz, notamment entre 40 kHz et 100 kHz

12. Dispositif selon une des revendications 7 à 11, **caractérisé en ce que** le PCB à analyser (12) est disposé entre le dispositif d'acquisition d'images (14) et au moins une partie de la source lumineuse (16) de manière à ce qu'une lumière traversant (24) le PCB (12) soit acquise par le dispositif d'acquisition d'images (14), sachant que la lumière traversante (24) est de préférence une lumière blanche.
